**Europäisches Patentamt**

**European Patent Office**

**Office européen des brevets**

(11) Veröffentlichungsnummer: **0 475 340 A1**

# EUROPÄISCHE PATENTANMELDUNG

(21) Anmeldenummer: **91115252.8**

(51) Int. Cl.5: **B60D 5/00**, B62D 47/02

(22) Anmeldetag: **10.09.91**

(30) Priorität: **10.09.90 DE 4028649**

(43) Veröffentlichungstag der Anmeldung:
**18.03.92 Patentblatt 92/12**

(84) Benannte Vertragsstaaten:
**AT CH DE FR GB IT LI**

(71) Anmelder: **Hymer-Leichtmetallbau**
**Postfach 1265**
**W-7988 Wangen/Allgäu(DE)**

(72) Erfinder: **Krause, Fritz**
**Ölmühle 2**
**W-7988 Wangen/Allgäu(DE)**

(74) Vertreter: **Riebling, Peter, Dr.-Ing.,**
**Patentanwalt**
**Rennerle 10, Postfach 31 60**
**W-8990 Lindau/B.(DE)**

(54) **Drehgelenk für Niederflur-Drehgelenk-Omnibusse.**

(57) Beschrieben wird ein Niederflur-Drehgelenk-Omnibus mit einem Drehgelenk zwischen einem Vorderwagen (1) und einem Hinterwagen (2), wobei das Drehgelenk durch einen Drehkranz (12) gebildet ist.

Um das Drehgelenk so weiterzubilden, daß eine sehr geringe Bauhöhe erreicht werden kann, ist es Vorgesehen, daß die vorderen und hinteren Rahmenrohre (4,5) sich nur bis kurz vor den Drehkranz (12) erstrecken und daß auf die Rahmenrohre (4,5) obere und untere Platten befestigt werden, welche eine innere Aufnahmeöffnung bilden, in welche der Drehkranz (12) aufgenommen wird.

FIG 2

EP 0 475 340 A1

Bei Niederflur-Drehgelenk-Omnibussen ist es bekannt, ein Drehgelenk zwischen dem Vorderwagen und dem Hinterwagen anzuordnen. Problem bei bekannten Drehgelenken ist die relativ hohe Bauhöhe, die daraus resultiert, daß auf einem unteren Rahmenrohr ein Kugeldrehkranz befestigt werden muß und auf diesem Kugeldrehkranz der Drehschemel selbst befestigt werden muß.

Außerdem müssen die bekannten Verbindungen entsprechend den Schub-, Dreh- und Knickkräften relativ groß dimensioniert werden, was ebenfalls zu einer hohen Bauhöhe führt.

Der vorliegenden Erfindung liegt deshalb die Aufgabe zugrunde, ein Drehgelenk der eingangs genannten Art so weiterzubilden, daß eine wesentlich geringere Bauhöhe erreicht wird.

Zur Lösung der gestellten Aufgabe ist die Erfindung durch die technische Lehre nach dem Anspruch 1 gekennzeichnet.

Merkmal der vorliegenden Erfindung ist, daß nun nach der vorliegenden Erfindung keine additive Aufeinanderstapelung verschiedener Bauelemente erfolgt, sondern daß bei der vorliegenden Erfindung die Bauelemente ineinander eingreifen und ineinander integriert sind. Bei der erfindungsgemäßen Anordnung wird die Bauhöhe dadurch vermindert, daß die Höhe des Rahmenrohres dazu verwendet wird, die oben genannten anderen Bauteile (Drehkranz und Schemel) innerhalb dieser Höhe unterzubringen. Nach der Erfindung ist also eine Integration der oben genannten Bauteile im Rahmenrohr vorgesehen.

Um auch die anderen Bauteile, welche der Versteifung gegen Knick-, Dreh- und Zugkräfte dienen, entsprechend geringer dimensionieren zu können, ist vorgesehen, daß eine obere und untere Trägerplatte vorhanden ist und dazwischen die oben genannten Bauteile angeordnet sind. Hierdurch ergibt sich bei verminderter Bauhöhe ein für die Festigung notwendiges Widerstandsmoment.

Bisher bekannte Niederflurgelenke haben eine Gesamthöhe von ca. 250 bis 300 mm. Nach der Erfindung wird diese Bauhöhe wesentlich unterschritten; sie liegt hierbei im Bereich von 120 bis 180 mm.

Die Erfindung wird nun anhand eines Ausführungsbeispiels näher erläutert. Hierbei ergeben sich aus dem Ausführungsbeispiel und ihrer Beschreibung weitere Vorteile und Merkmale der Erfindung.

Es zeigen:

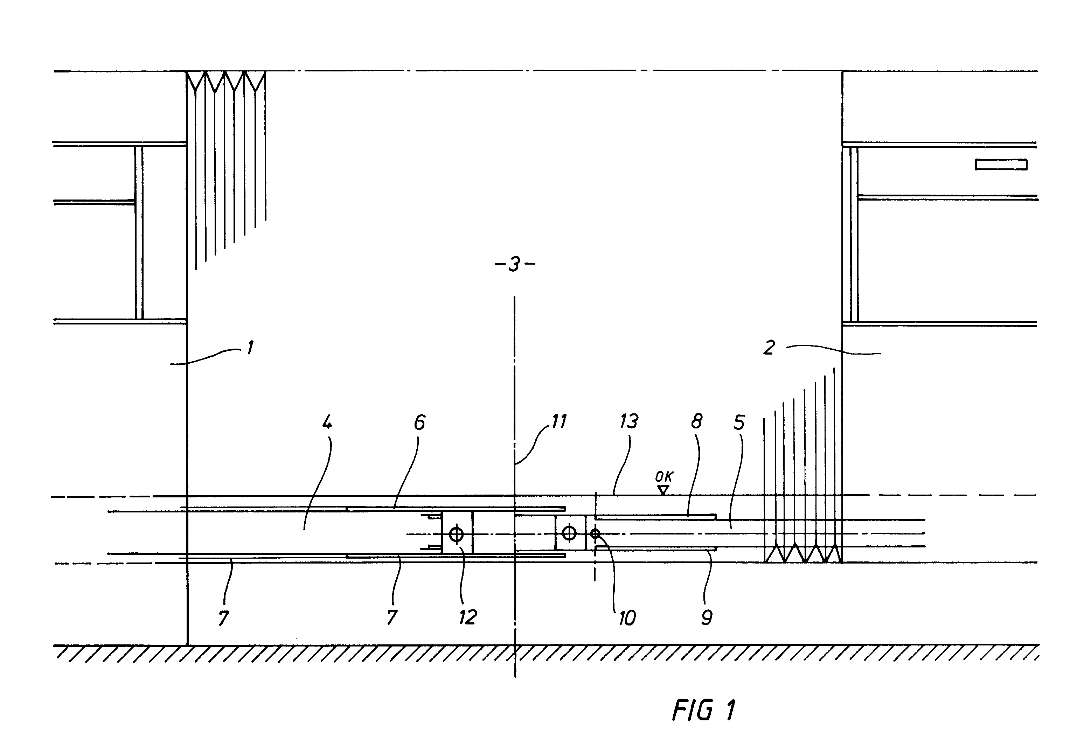

Figur 1: schematisiert in Seitenansicht die Verbindung zwischen einem Vorder- und einem Hinterwagen eines Niederflur-DrehgelenkOmnibusses;

Figur 2: die Draufsicht auf die Figur 1 in geknicktem Zustand;

Figur 3: schematisiert einen Schnitt entlang der Linie III-III in Figut 2.

An der Bodenseite eines Vorderwagens 1 ist hierbei ein Rahmenrohr 4 mit dem Chassis des Vorderwagens verbunden.

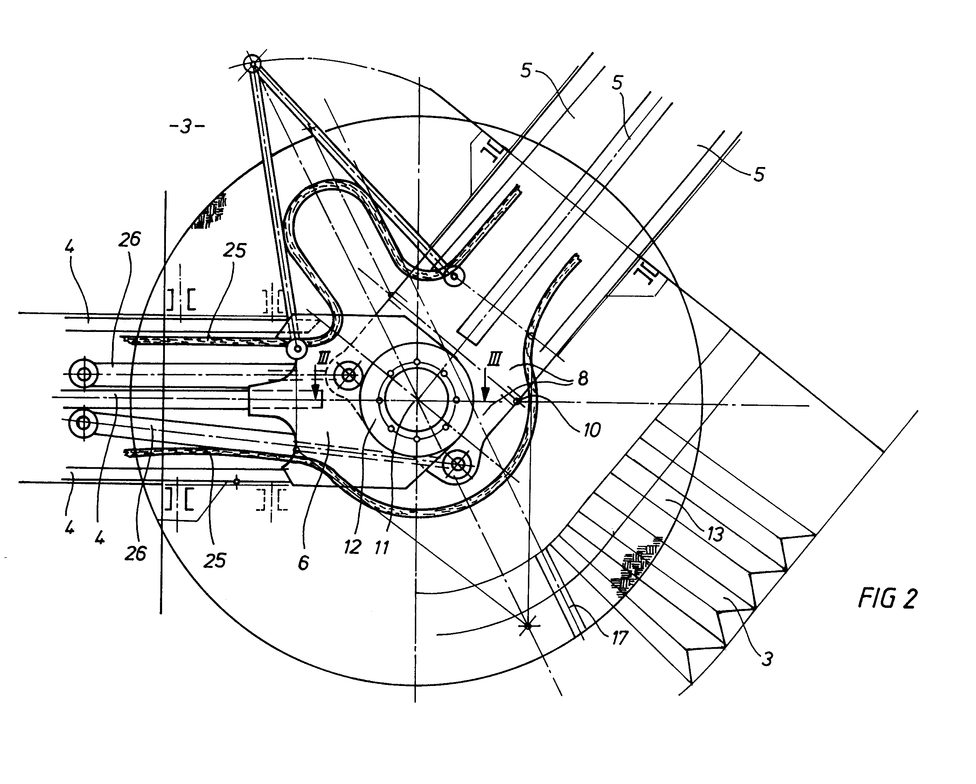

Das Rahmenrohr besteht gemäß der Darstellung in Figur 2 aus drei parallel zueinander angeordneten Vierkantrohren, die über die später noch zu beschreibenden Platten im Bereich des Drehgelenkes miteinander verbunden sind.

In analoger Weise ist am Hinterwagen 2 ein gleiches Rahmenrohrbündel 5 befestigt, welches Rahmenrohr aus drei Rohren besteht, die parallel und in gegenseitigem Abstand voneinander angeordnet sind und über die später noch zu beschreibenden weiteren Platten miteinander verbunden sind.

Am Vorderwagen ist hierbei ein Faltenbalg 3 angeordnet, der in gleicher Weise am Hinterwagen 2 befestigt ist.

Die Oberseite des Drehgelenkes ist über eine Abdeckplatte 13 abgedeckt.

Um einen ebenen Übergang zwischen dem Vorderwagen und dem Hinterwagen zu erreichen ist es vorgesehen, daß die Abdeckplatte 13 scharnierartig ausgebildet ist und ein mittiges oder mittig versetztes Scharnier 17 aufweist, welches aus einem flexiblen Material besteht, wie z. B. einem Kunststoffmaterial. Es fehlt also eine definierte Scharnierachse, sondern es ist ein Zwischenteil zwischen den beiden festen plattenartigen Teilen der Abdeckplatte vorgesehen, welches Zwischenteil als Scharnier 17 wirkt und Längenänderungen, herrührend von Torsionsbewegungen von Vorder- und Hinterwagen, zuläßt.

Dieses Teil nimmt dann die Torsionsbewegung und somit auch herrührende Längenänderungen relativ zwischen dem Vorderwagen 1 und dem Hinterwagen 2 auf.

Erfindungsgemäß ist nun vorgesehen, daß das vordere Rahmenrohr 4 sich mit seiner Stirnseite 19 nur kurz vor den Drehkranz 12 erstreckt und daß auf die Oberseite und die Unterseite des jeweiligen Rahmenrohres 4 eine obere Platte 6 sowie eine untere Platte 7 aufgeschweißt sind.

Diese Platten bilden also einen gegenseitigen Abstand und somit eine Aufnahmeöffnung 15, in welche von hinten in Pfeilrichtung 16 der gesamte Drehkranz 12 eingeschoben werden kann. Hierdurch wird die geringe Bauhöhe erreicht, denn es wird hier eine Sandwich-Bauweise erzielt, weil in die Aufnahmeöffnung 15, die nach oben nur im wesentlichen durch die Platten 6,7 begrenzt ist, der gesamte Drehkranz eingeschoben wird.

Der Drehkranz besteht hierbei aus einem inneren und aus einem äußeren Laufring mit dazwischen angeordneten Kugeln, wobei sich der innere Ring 20 über einen Zwischenring 21 an der Unterseite der oberen Platte 6 abstützt.

In analoger Weise ist die Verbindung des Drehkranzes 12 zu dem Hinterwagen gelöst. Hier ist ebenfalls auf dem hinteren Rahmenrohr 5 eine obere Platte 8 und eine untere Platte 9 aufgeschweißt. Die Stirnseite 22 des Rahmenrohres 5 erstreckt sich bis kurz vor die Nickachse 10, wobei in gleicher Weise auf dem Rahmenrohr 5 eine obere Platte 8 und eine untere Platte 9 befestigt sind, welche Platten zwischen sich den äußeren Ring 23 des Drehkranzes 12 aufnehmen.

Hier ist wiederum ein Zwischenring 21 vorgesehen, welcher sich an der Unterseite der oberen Platte 8 abstützt.

Über eine Auffütterung 24 ist hierbei der äußere Ring 23 an der Unterseite der Platte 8 abgestützt.

Es versteht sich von selbst, daß der Drehkranz 12 auch anders aufgebaut werden kann, beispielsweise in der Weise, daß sich die beiden Ringe 20,23 oben in der Nähe der Platten 6,8 befinden und daß dann die Ringe 21 und die Auffütterung 24 sich unten an den Platten 7 und 9 abstützen.

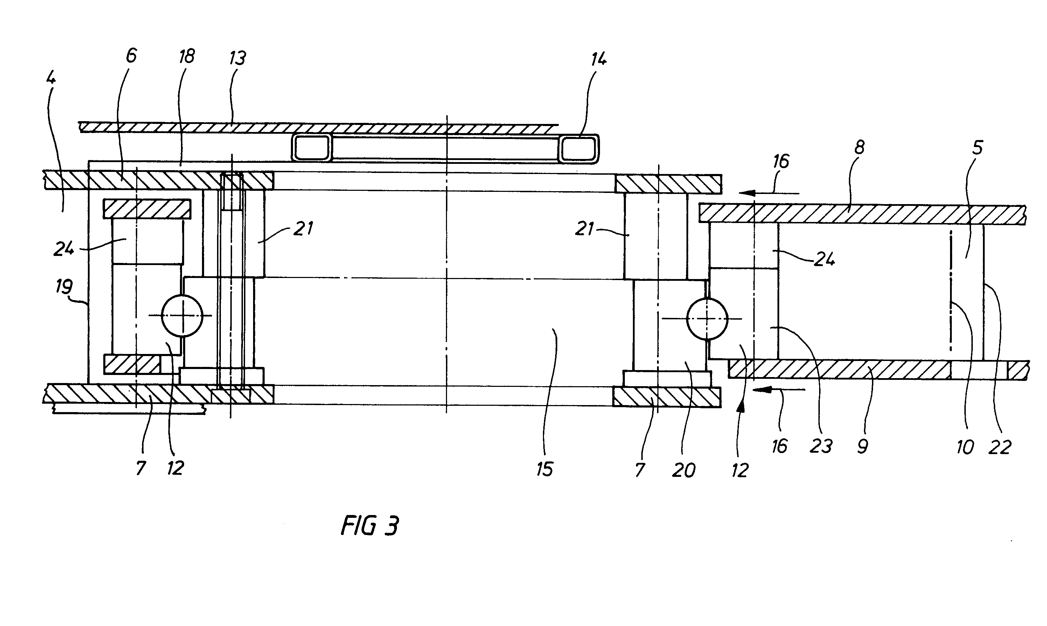

Die Auffütterung 24 hat gemäß der Darstellung in Figur 3 Ringform oder ist mit örtlichen Verstärkungen versehen.

An der Oberseite der Platte 6 ist eine Gleitplatte 18 angeordnet, die den Balgträger 14 trägt, der seinerseits nach oben von der Abdeckplatte 13 abgedeckt ist.

Mit dem beschriebenen sandwichartigen Aufbau wird also der wesentliche Vorteil einer geringen Bauhöhe erzielt, weil eben das Rahmenrohr 4 lediglich eine Höhe von 100 m aufweist und auf das Rahmenrohr 4 die vorher erwähnten Platten 6,7 mit einer Bauhöhe von etwa 10 mm aufgeschweißt sind, welche Platten 6,7 zwischen sich die Aufnahmeöffnung 15 bilden, um den gesamten Drehkranz dort aufzunehmen.

Ferner ist wichtig, daß die Nickachse 10 baulich entfernt von der Knickaschse 11 des Drehkranzes 12 angeordnet ist, woraus ebenfalls eine Verminderung der Bauhöhe resultiert, weil die beiden Bauteile nicht aufeinander aufgebaut sind, sondern räumlich getrennt voneinander angeordnet sind und daher keine zusätzliche Bauhöhe beanspruchen.

Von besonderem Vorteil ist, daß die Versorgungsleitungen 25 vom Vorderwagen in den Hinterwagen zwischen den oberen und unteren Platten 6-9 eingebaut werden können und im Bereich zwischen den voneinander beabstandeten Rahmenrohren 4,5 angeordnet werden können, um diese Versorgungsleitungen optimal gegen Beschädigungen zu schützen. Es wird also damit vermieden, daß - wie bekannt - die Versorgungsleitungen außen an der Omnibuswand entlang geführt werden müssen.

Ebenso ist es vorteilhaft, daß auch die Stabilisierungszylinder 26 im Zwischenraum zwischen den Platten 6 - 9 geführt werden können und deshalb optimal gegen Beschädigungen geschützt sind und ebenfalls aufgrund ihres Einbaus in den Rahmenrohren 4,5 eine Vergrößerung der Bauhöhe nicht bewirken.

Die Platten 6 - 9 sind so gestaltet, daß diese auch zueinander als mechanischer Anschlag für das Drehgelenk dienen können.

ZEICHNUNGS-LEGENDE

| 1 | Vorderwagen |
|---|---|
| 2 | Hinterwagen |
| 3 | Faltenbalg |
| 4 | Rahmenrohr |
| 5 | Rahmenrohr |
| 6 | Platte (vorne, oben) |
| 7 | Platte (vorne, unten) |
| 8 | Platte (hinten, oben) |
| 9 | Platte (hinten, unten) |
| 10 | Nickachse |
| 11 | Knickachse |
| 12 | Drehkranz |
| 13 | Abdeckplatte |
| 14 | Balgträger |
| 15 | Aufnahmeöffnung |
| 16 | Pfeilrichtung |
| 17 | Scharnier |
| 18 | Gleitplatte |
| 19 | Stirnseite |
| 20 | Ring |
| 21 | Zwischenring |
| 22 | Stirnseite |
| 23 | Ring |
| 24 | Auffütterung |
| 25 | Versorgungsleitung |
| 26 | Stabilisierungszylinder |

**Patentansprüche**

1. Niederflur-Drehgelenk-Omnibus, mit einem Drehgelenk zwischen einem Vorderwagen und einem Hinterwagen, wobei das Drehgelenk durch einen Drehkranz gebildet ist, **dadurch gekennzeichnet**, daß die vorderen und hinteren Rahmenrohre (4,5) sich nur bis kurz vor den Drehkranz (12) erstrecken, daß auf die Rahmenrohre (4,5) obere und untere Platten (6-9) befestigt sind, welche eine innere Aufnahmeöffnung (15) bilden, in welche der Drehkranz (12) aufgenommen ist.

2. Niederflur-Drehgelenk-Omnibus nach Anspruch 1,
**dadurch gekennzeichnet**, daß jedes Rahmenrohr (4,5) aus drei Rohren von einen parallelen Abstand zueinander einnehmenden Vierkantrohren gebildet ist und daß diese Rohre von den oberen und unteren Platten (6-9) zusammengehalten sind.

3. Niederflur-Drehgelenk-Omnibus nach Anspruch 1 oder 2,
   **dadurch gekennzeichnet**, daß die Nickachse (10) von der Knickachse (11) räumlich getrennt ist.

4. Niederflur-Drehgelenk-Omnibus nach einem der Ansprüche 1 bis 3,
   **dadurch gekennzeichnet**, daß die Stabilisierungszylinder (26) im Innenraum zwischen den oberen und unteren Platten (6,7) angeordnet sind.

5. Niederflur-Drehgelenk-Omnibus nach einem der Ansprüche 1 bis 4,
   **dadurch gekennzeichnet**, daß die Versorgungsleitungen (25) im Innenraum zwischen den oberen Platten (6,8) und den unteren Platten (7,9) angeordnet sind.

6. Niederflur-Drehgelenk-Omnibus nach einem der Ansprüche 1 bis 5,
   **dadurch gekennzeichnet**, daß die das Drehgelenk nach oben abdeckende Abdeckplatte (13) scharnierartig ausgebildet ist, und aus zwei starren, plattenförmigen Teilen besteht, welche Teile durch ein scharnierartig verformbares und längenbewegliches Zwischenteil miteinander verbunden sind, wobei durch diese Verformbarkeit Relativbewegungen in Längsachse von Vorder- und Hinterwagen aufgenommen werden.

FIG 1

EP 0 475 340 A1

FIG 2

EP 0 475 340 A1

FIG 3

EP 0 475 340 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 340 760 (WAGGON UNION GMBH)<br>* das ganze Dokument * * <br>– – – | 1,3 | B 60 D 5/00<br>B 62 D 47/02 |
| A | DE-A-3 904 756 (HYMER-LEICHTMETALLBAU)<br>* Zusammenfassung * * * Spalte 6, Zeile 2 - Spalte 6, Zeile 8; Anspruch 4 * *<br>– – – | 1,4 | |
| A | EP-A-0 046 484 (SCHENK GMBH)<br>* Ansprüche 1,6,10; Abbildungen * *<br>– – – | 1,4,5 | |
| A | DE-B-1 136 222 (KÄSSBOHRER FAHRZEUGWERKE)<br>* Anspruch 1; Abbildungen * *<br>– – – – – | 1 | |

|  | RECHERCHIERTE SACHGEBIETE (Int. Cl.5) |
|---|---|
|  | B 60 D<br>B 62 D<br>B 61 D |

Der vorliegende Recherchenbericht wurde für alle Patentansprüche erstellt

| Recherchenort | Abschlußdatum der Recherche | Prüfer |
|---|---|---|
| Den Haag | 17 Dezember 91 | GONZALEZ GRANDA C. |